# EUROPÄISCHE PATENTSCHRIFT

(11) **EP 4 139 255 B1**
(45) Veröffentlichungstag und Bekanntmachung des Hinweises auf die Patenterteilung: **07.01.2026**
(21) Anmeldenummer: 21728508.9
(22) Anmeldetag: 20.05.2021
(51) Int. Cl.: C03C 15/00, C03C 23/00

(54) **SUBSTRAT AUS GLAS UND EIN VERFAHREN ZU SEINER HERSTELLUNG**
SUBSTRATE MADE OF GLASS AND METHOD FOR THE PRODUCTION THEREOF
SUBSTRAT EN VERRE ET SON PROCÉDÉ DE PRODUCTION

(30) Priorität: 28.07.2020 DE 102020119929
(43) Veröffentlichungstag der Anmeldung: 01.03.2023
(73) Patentinhaber: LPKF Laser & Electronics SE, 30827 Garbsen (DE)
(72) Erfinder: OSTHOLT, Roman, 30855 Langenhagen (DE); AMBROSIUS, Norbert, 30827 Garbsen (DE); DUNKER, Daniel, 30419 Hannover (DE); VOGT, Aaron, Michael, 30173 Hannover (DE); SCHNEIDER, Sergej, 30171 Hannover (DE)
(74) Vertreter: Scheffler, Jörg
(86) Internationale Anmeldenummer: PCT/EP2021/063533
(87) Internationale Veröffentlichungsnummer: WO 2022/022873

(56) Entgegenhaltungen:
- WO-A1-2015/116466
- WO-A1-2020/228893
- DE-A1- 102014 113 339

## Beschreibung

Die Erfindung betrifft ein Substrat aus Glas, welches zumindest einen im wesentlichen formstabilen Abschnitt und zumindest einen flexiblen Abschnitt aufweist, sowie ein Verfahren zur Herstellung des Substrats.

Derartige Substrate aus Glas gewinnen als Displays, beispielsweise auf der Basis von organischen Leuchtdiode (OLED) für Anzeigezwecke zunehmend an Bedeutung, insbesondere bei kleinen Vorrichtungen, wie mobil mitführbare Geräte.

Es ist bekannt, OLED-Anzeigen flexibel auszuführen. Hierzu sind bereits Verfahren zum nachträglichen Strukturieren einer flexiblen organischen lichtemittierenden Diode (FOLED) bekannt, bei dem schrittweise ein oder mehrere Schichten von der gestapelten Schichtanordnung mittels Laserstrahlung wieder abgetragen werden (Ablation).

Da diese aus Schichten von organischen Materialien auf flexiblen Trägersubstraten hergestellt werden können, einschließlich flexiblen Treiberschaltungen, lassen sie sich an nicht-ebene Oberflächen anpassen oder in Strukturen einsetzen, welche selbst flexible Eigenschaften haben.

Als problematisch erweist sich die Empfindlichkeit der OLED-Materialien auf Sauerstoff und/oder Feuchtigkeit, was in relativ kurzen Lebensdauern resultiert. Dies kann beispielsweise gelöst werden, indem die eigentlichen OLED-Komponenten zwischen zwei Glas-Schichten eingebracht werden, welche im Wesentlichen frei von Sauerstoff und/oder Dampfdiffusion sind.

Eine weitere Möglichkeit ist es, die OLED-Anzeige auf einem Glassubstrat mit einer Sperrschicht zu verwenden. Diese Sperrschichten können beispielsweise aus Siliziumoxiden (SiO2), (Bor-)Silikaten, Aluminaten (Al2O3) oder Metallschichten (AI, Ag, Au, Rh) oder anderen entsprechenden Materialien aufgebaut werden.

Derartige OLED-Strukturen oder -Vorrichtungen bleiben flexibel, falls die Glasschichten eine Dicke unterhalb bestimmter Grenzen haben. Typischerweise haben OLEDs mit Glasschichten und einer Dicke von 100 µm oder weniger immer noch die notwendige Flexibilität für die meisten Zwecke.

Allerdings sind derartige dünne Glasschichten, d. h. unter 50 µm, oder selbst unter 20 µm, zerbrechlich und neigen wegen ihrer Sprödigkeit zum Brechen. Somit ist es von diesem Aspekt her wünschenswert, derartige OLEDs zu Stabilisierungszwecken mit mechanisch festen (flexiblen oder nicht-flexiblen) Trägersubstraten zu verbinden.

Bei der Produktion von klassischen Displays für Smartphones wird ein Trägersubstrat aus Glas als unterste Schicht verwendet, die sogenannte "Back Plane". Die Eigenschaften von technischen Gläsern sind ideal für die Anforderungen an ein Back Plane.

Mit der Entwicklung von faltbaren Displays für neuartige Smartphones ging eine signifikante Änderung der Prozessabfolge einher. Die ursprünglich zur Stabilisierung und Fixierung der elektronischen Komponenten gedachten Back Planes aus Glas müssen in der aktuellen Herangehensweise nach der Aufbringung der Komponenten in einem aufwendigen und den Ausschuss erhöhenden Verfahren (Laser-Lift-Off-Verfahren) entfernt werden. Auf diese Weise bleiben nur die biegsamen Komponenten des Displays ohne die schützende Back Plane zurück

Beim Laser-Lift-Off-Verfahren geht es um den Transfer einer mikroelektronischen Funktionsschicht auf ein neues Trägersubstrat, welches leichter und dünner ist. Die Trennung der Schichten erfolgt dabei meistens durch selektive Laserablation und Verdampfen einer stark absorbierenden Zwischenschicht, typischerweise einer Polymerschicht. Entscheidend ist, die angrenzende mikroelektronische Funktionsschicht durch die Energie der Laserstrahlung nicht zu beeinträchtigen.

Die Produktion flexibler Displays, ob sie in einem Smartphone, Tablet oder E-Reader zum Einsatz kommen, haben immer eines gemeinsam: Die Schaltkreisschichten zur individuellen Pixel-Steuerung befinden sich nicht mehr auf einem festen Glasträger, sondern auf einer biegsamen Schicht.

Nachteile des herkömmlichen Laser-Lift-Off-Verfahrens sind die hohen Prozesszeiten/Produktionskosten und der Ausschuss, der durch das Verfahren zusätzlich entsteht, da Displays bei diesem Verfahren beschädigt werden können.

Derartige flexible Anzeigevorrichtungen sind beispielsweise aus der EP 3 206 108 B1, EP 3 456 036 A1 oder der EP 2 709 091 B1 bekannt.

Weiterhin bezieht sich die US 2016 / 0 057 834 A1 auf ein Verfahren zur Herstellung eines Substrats für ein Anzeigemodul. Ein Substratkörper mit einem Signalschaltungsbereich wird auf eine transparente Trägerplatte aufgebracht. In den Substratkörper werden eine Vielzahl von Öffnungen eingebracht und eine untere Oberfläche durch hochenergetisches Licht durch die transparente Trägerplatte geätzt, um den Substratkörper von der transparenten Trägerplatte zu trennen.

Die JP 2013 - 009 016 A bezieht sich auf eine Vielzahl von Dünnfilmelementen auf einer Halbleiterschicht, bei dem eine Ätzrille durch Laserätzen zwischen einer Vielzahl von Dünnfilmelementen eingebracht ist.

Die WO 2015 / 116 466 A1 offenbart ein Substrat aus Glas, welches zumindest einen im Wesentlichen formstabilen Abschnitt und zumindest einen flexiblen, insbesondere biegbaren Abschnitt aufweist, wobei zumindest in dem flexiblen Abschnitt einseitige bzw. das Substrat nicht durchdringende Ausnehmungen in eine Außenfläche des Substrats eingebracht sind und dadurch die Materialstärke des Substrats in dem flexiblen Abschnitt gegenüber dem angrenzenden Abschnitt reduziert ist.

Außerdem beschreibt die DE 10 2014 113 339 A1 ein Verfahren zum Einbringen einer Ausnehmung in ein plattenförmiges Werkstück, wobei Fehlstellen in Form einer linearen Kette von Bläschen und/oder chemischen Modifikationen durch die Wechselwirkung mit einer Laserstrahlung gebildet werden. Anschließend kommt es aufgrund der Einwirkung eines ätzenden Mediums zu einem anisotropen Materialabtrag im Bereich der Fehlstellen, sodass entlang einer zylindrischen Einwirkungszone eine Ausnehmung als Durchbrechung in dem Werkstück entsteht.

Die Aufgabe der vorliegenden Erfindung besteht darin, ein Trägersubstrat für ein Display zu schaffen, welches wesentlich verbesserte flexible Eigenschaften aufweist und dabei zugleich hohe Anforderungen an die Belastung der Glasoberfläche, beispielsweise in Form eines sogenannten Pen-Drop-Tests erfüllt.

Erfindungsgemäß weist das faltbare Substrat aus Glas insbesondere für Displayanwendungen folgende Eigenschaften auf:
1. Einseitig nicht durchgängige Strukturen einbringen, um Glasdicke zu reduzieren → faltbar und mechanisch hochstabil (mittels Pen-Drop-Test gezeigt)
2. Mindestens zwei Bereiche mit unterschiedlichen Dicken
3. Dicke im Bereich des Gelenks < 100 µm, bevorzugt < 50 µm, bevorzugt < 30 µm
4. Aufgefüllt mit Polymer
5. Boden wird aus sphärischen Vertiefungen gebildet
6. Vertiefungen können verschieden angeordnet sein, z. B. dichte Kugelpackung (bzw. hexagonale Anordnung) oder quadratische Anordnung
7. Erfüllt den Pen-Drop-Test (im Gegensatz zu einfach nur dünnem Bereich)
8. Mehrere Bereiche können unterschiedliche Glasdicke ausweisen, auch Ursprungsdicke

Die Ebene einer neutralen Faser könnte ausschließlich durch einen Bereich der Vertiefungen verlaufen, in dem die Vertiefungen frei von Unstetigkeitsstellen sind. Vorzugsweise unterteilt die Ebene der neutralen Faser den Bereich in einen der Außenfläche abgewandten ersten Teilbereich, in dem die Vertiefungen frei von Unstetigkeitsstellen sind, und in einen zweiten Teilbereich, in dem die Vertiefungen einen stetigen und/oder nicht stetigen Verlauf aufweisen.

Zumindest einzelne Ausnehmungen können ein polymeres Füllmaterial, insbesondere mit einer Füllhöhe entsprechend der angrenzenden Abschnitte, aufweisen, wobei das polymere Füllmaterial vorzugsweise zumindest im Wesentlichen einen mit dem Brechungsindex im sichtbaren Spektrum des Glases überstimmenden Brechungsindex oder flexible und/oder elastische Materialeigenschaften aufweist.

Gemäß einer vorteilhaften Ausführungsform sind die Vertiefungen durch zumindest abschnittsweise periodisch bzw. in einem regelmäßigen Muster angeordnete Mikrostrukturen gebildet. Beispielsweise können die Vertiefungen in einem geometrischen, insbesondere rechteckigen Muster angeordnet sein.

Besonders Erfolg versprechend ist es, wenn in zumindest einem, insbesondere in mehreren benachbarten flexiblen Abschnitten die verbleibende Materialstärke als Restdicke d des Substrats durch unterschiedliche Vertiefungen, insbesondere kontinuierlich abnehmend oder zunehmend, ausgeführt ist, wobei die verbleibende Materialstärke bzw. Restdicke in dem flexiblen Abschnitt kleiner als 100 µm, bevorzugt kleiner als 50 µm, bevorzugt kleiner als 30 µm ist.

Außerdem können die Vertiefungen nach dem Prinzip einer dichten Kugelpackung, einer hexagonalen oder quadratischen Anordnung in dem flexiblen Abschnitt angeordnet oder nach dem Prinzip eines gotischen Kirchendachs eingebracht sein.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig. 1 eine Querschnittsansicht eines Substrats aus Glas;
Fig. 2 eine vergrößerte Querschnittsansicht des Substrats;
Fig. 3 eine vergrößerte Querschnittsansicht des Substrats;
Fig. 4 eine schematische Verteilung der Vertiefungen in dem Substrat in einer Draufsicht;
Fig. 5 den Ablauf der Verrundung der Modifikation beim Ätzen in verschiedenen Stufen.

Die Erfindung betrifft eine Vorrichtung aus Glas mit mindestens zwei Bereichen:
- mindestens ein Bereich nicht faltbar
- mindestens ein Bereich faltbar
- faltbarer Bereich weist einseitig Mikrostrukturen auf
- Mikrostrukturen weisen unterhalb der Mittellinie konkave Bereiche mit glattem Verlauf auf
- Mikrostrukturen weisen oberhalb der Mittellinie konvexe Bereiche mit nicht glattem Verlauf auf

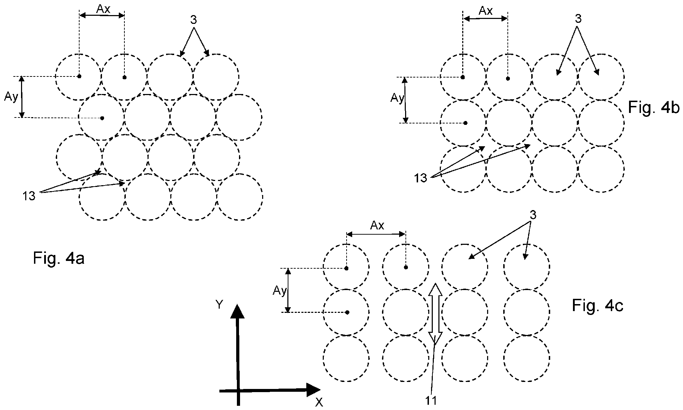

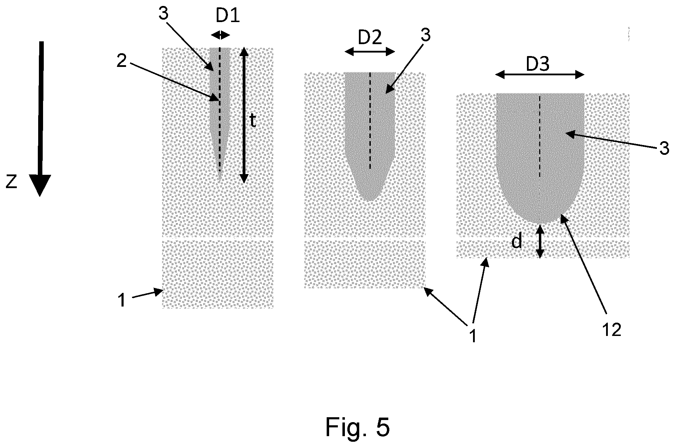

Das Verfahren zur Herstellung eines Substrats 1 aus Glas beruht auf der Erzeugung von linienförmigen Modifikationen 2 mit Erstreckung in z-Richtung und einer Restdicke d des Substrats 1 wie in Figur 5 erkennbar und mit einem definierten Abstand in x- und y-Richtung wie in Figur 4 gezeigt. Jede Modifikation 2 endet im Volumen des Substrats 1 mit einer Modifikationstiefe t. Sobald modifiziertes Glas des Substrats 1 durch Nassätzen entfernt wurde, verläuft der Ätzprozess in dem verbleibenden Substrat 1 isotrop. Es entsteht eine Vertiefung 3 mit einem Abstand zu der gegenüberliegenden Oberfläche des Substrats 1 und einer Restdicke d, deren Erreichen zugleich die gesamte Ätzdauer definiert.

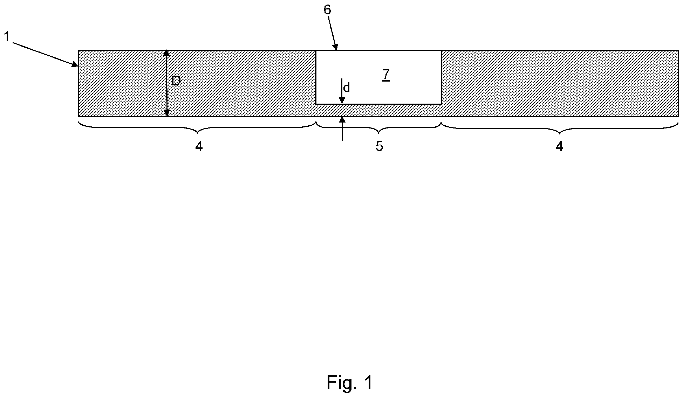

Wie in Figur 1 dargestellt besteht das hier beispielhaft dargestellte Substrat 1 aus einem im Wesentlichen formstabilen Abschnitt 4 und zumindest einem flexiblen, insbesondere biegbaren, elastischen und/oder faltbaren Abschnitt 5, wobei zumindest in dem flexiblen Abschnitt 5 eine einseitige bzw. das Substrat 1 nicht durchdringende Ausnehmung 6 durch eine Vielzahl von Vertiefungen 3 als Mikrostrukturen 12 in eine Außenfläche des Substrats 1 eingebracht sind und dadurch die Materialstärke D des Substrats 1 in dem flexiblen Abschnitt 5 gegenüber dem angrenzenden Abschnitt 4 bis auf die Restdicke d reduziert. Die Ausnehmung 6 wird mit einem Polymer 7 gefüllt, welches beispielsweise ähnliche optische Eigenschaften aufweisen kann wie das Glasmaterial des Substrats 1.

Dabei ist die Ausnehmung 6 durch mehrere bzw. eine Vielzahl von Vertiefungen 3 in dem verbliebenen Substratmaterial gebildet und durch eine Vielzahl regelmäßig angeordneter, konkaver Mikrostrukturen 12 begrenzt, deren Ausformung zugleich die verbleibende Materialstärke als Restdicke d des Substrats 1 in dem flexiblen Abschnitt 5 bestimmt. Die Vertiefungen 3 erstrecken sich mit ihrer minimalen bis maximalen Tiefe in einem Bereich des Substrats 1 mit einer Stärke S parallel zu der Außenfläche, welcher bei einer Biegung des Substrats 1 aufgrund einer äußeren Krafteinwirkung F die Ebene einer neutralen Faser 8 zwischen einer Dehnungszone 9 und einer Kompressionszone 10 des Substrats 1 einschließt.

Folgende Aspekte bilden wesentliche Ausgestaltungsformen der Erfindung:
- faltbarer bzw. flexible Abschnitt 5 mit Vertiefungen 3, die durch periodisch angeordnete Mikrostrukturen 12 begrenzt sind
- periodisch angeordnete Mikrostrukturen 12 weisen jeweils ein Zentrum auf, in dem die Glasdicke bzw. Restdicke d am kleinsten ist
- periodisch angeordnete Mikrostrukturen12 können rechteckig angeordnet sein
- rechteckige Anordnung weist entlang der Faltungsrichtung 11 einen mindestens um 20 % größeren Abstand Ax der Zentren der Mikrostrukturen 12 als der Abstand Ay der Zentren der Mikrostrukturen 12 quer zu der Faltungsrichtung 11 auf
- Vertiefungen 3 werden mit Polymer 7 aufgefüllt
- Polymer 7 weist ungefähr den gleichen Brechungsindex im sichtbaren Spektrum wie das Glasmaterial des Substrats 1 auf
- Polymer 7 ist flexibel
- Substrat 1 inkl. Polymerfüllung besteht im faltbaren Bereich den Pen-Drop-Test
- zwischen dem formstabilen Abschnitt 4 und dem flexiblen Abschnitt 5 kann ein Übergangsbereich erzeugt werden, der eine kontinuierlich abnehmende Glasdicke mit stetig abnehmender Restdicke d aufweisen,
wobei folgende Bestimmungen gelten sollen:
"faltbar": Krümmungsradius < 20 cm
"oberhalb": Auf der vom Glas abgewandten Seite
"unterhalb": Auf der dem Glas zugewandten Seite
"konkav": In Richtung des Glases gewölbt
"konvex": Entgegen konkaver Wölbung gewölbt
"Mittellinie": Gedachte Linie, die gleichen Abstand zu obersten und untersten Punkten der Mikrostrukturen im Glas hat
"Pen-Drop-Test": Ein Kugelschreiber (BIC easy glide, Gewicht 5,73 g) wird mit der Spitze (aus Wolframcarbit mit 0,7 mm Durchmesser) voraus auf ein Werkstück aus einer Höhe von 20 cm fallengelassen und Bruch des Werkstücks wird festgestellt
"Glas": Material mit einem Glasanteil, beinhaltet auch Glaskeramik
"x-Richtung": Entlang der Oberfläche des Glaskörpers, senkrecht zur Faltungsrichtung
"y-Richtung": Entlang der Oberfläche des Glaskörpers, parallel zur Faltungsrichtung
"z-Richtung": Senkrecht zu x und y

Die die konkaven Vertiefungen 3 begrenzenden Mikrostrukturen 12 am Boden der Vertiefungen 3 sorgen für mechanische Stabilität im Bereich der geringen Glasdicke; ähnlich einem gotischen Kirchendach weisen die Grenzflächen der Mikrostrukturen 12 auf der auf dem verbliebenen Glasmaterial des Substrats 1 zugewandten Seite lediglich abgerundete, konkave Strukturen auf. Spitzen werden vermieden, wodurch die mechanische Stabilität des dünnen Bereichs bzw. der dünnen Bereiche größer ist als bei komplett glatten Bodenflächen.

Dies wurde mittels Pen-Drop-Test gezeigt: Dieser Test ist für Gläser, die für Displays eingesetzt werden, besonders wichtig und praxisnah. Ein Stift wird mit der Spitze voran auf das Glas fallengelassen. Bricht das Glas, ist es für Displayanwendungen nicht stabil genug. Dies passiert bei einem flachen Dünnglas. Werden erfindungsgemäß Strukturen eingebracht, die die o. g. Merkmale erfüllen, so besteht das Glas den Pen-Drop-Test, obwohl die Dicke des Glases nicht erhöht wird.

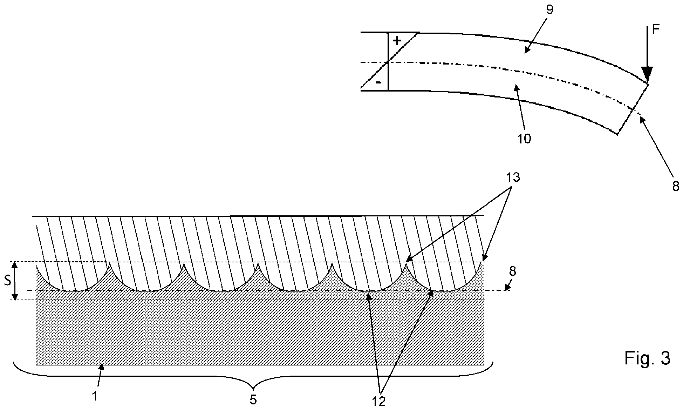

Wie in der Figur 3 erkennbar ist, wird die Dicke des Polymers 7 und des Substrats 1 so gewählt, dass die neutrale Faser 8 im Bereich der konkaven Mikrostrukturen12 liegt, möglichst nahe am sphärischen Boden. Idealerweise stimmt die neutrale Faser 8 mit der Bodenfläche überein.

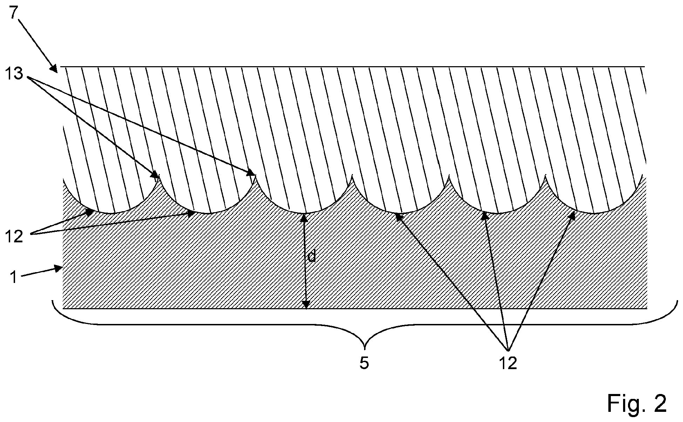

Eine dementsprechende Gestaltung der Vertiefungen 3 in dem flexibler Abschnitt 5 ist in den Figuren 2 und 3 dargestellt. Durch die sphärischen Ausformungen der Mikrostrukturen 12 entstehen vorspringende, spitz zulaufende Zwischenbereiche 13 zwischen den Vertiefungen 3, die lediglich in Richtung des Polymers 7 als Füllmaterial gerichtet sind. In Richtung des verbliebenen Glasmaterials des Substrats 1 weist die Begrenzungsfläche der Mikrostrukturen 12 ausschließlich glatte, abgerundete Strukturen auf. Diese aus einer Vielzahl aneinander angrenzender sphärischer oder sphäroider Flächenabschnitte gebildete Grenzfläche bewirkt sowohl eine hohe Belastbarkeit trotz der verminderten Restdicke d als auch eine Biegsamkeit in Richtung der Füllung des Polymers 7.

Dabei wird wie in Figur 3 gezeigt das Verhältnis der Vertiefungen 3, die mit dem Polymer 7 gefüllt sind, und der Restdicke d des Glassubstrats mittels der Modifikationstiefe t so gewählt, dass die neutrale Faser 8 im Bereich der konkaven Mikrostrukturen 12 liegt, vorzugsweise nach am sphärischen Boden im Zentrum der Mikrostrukturen 12 mit der geringsten Restdicke dmin. Idealerweise stimmt die neutrale Faser 8 mit der durch die geringsten Restdicke dmin bestimmten Ebene überein.

In Figur 4 sind mögliche Anordnungen bzw. Verteilungen der Vertiefungen 3 in dem Substrat 1 dargestellt. Die in Figur 4a dargestellte hexagonale Anordnung bzw. dichte Kugelpackung, bei welcher der tiefste Punkt einer sphärischen Vertiefung 3 im Zentrum der Vertiefung 3 liegt und bei der die der Polymerfüllung zugewandten Spitzen bzw. spitz zulaufenden Zwischenbereiche 13 zwischen den Vertiefungen 3 minimiert sind, ergeben sich Vorteile bei der Torsion in verschiedene Richtungen, da sich die Spannung weitgehend homogen über die Fläche verteilt.

Während in Figur 4b eine quadratische Anordnung mit übereinstimmenden Abständen zu allen benachbarten Vertiefungen 3 und dementsprechend homogenen flexiblen Eigenschaften dargestellt ist, zeigt Figur 4c beispielhaft eine vorteilhafte Anordnung für Faltungen in horizontaler Richtung mit unterschiedlichen Abständen Ax in x-Richtung und Ay in y-Richtung entsprechend der Faltungsrichtung 11.

Sobald, wie in Figur 5 gezeigt ist, die Modifikationstiefe t erreicht wird, verläuft der Ätzfortschritt in dem Substrat 1 im Wesentlichen isotrop, was zunehmend zu einer Verrundung der entstehenden Vertiefung 3 im Bereich der Spitze am Ende der Modifikation 2 führt. Insbesondere wird also beim Ätzen das Substrat 1 dünner und der Durchmesser D1 bis D3 der Vertiefungen 3 größer. Die Verrundung wird somit durch "Überätzen" erreicht.

### BEZUGSZEICHENLISTE

| | | | |
|---|---|---|---|
| 1 | Substrat | t | Modifikationstiefe |
| 2 | Modifikation | d | Restdicke |
| 3 | Vertiefung | D | Materialstärke |
| 4 | Abschnitt | S | Stärke |
| 5 10 | Abschnitt | F | Krafteinwirkung |
| 6 | Ausnehmung | Ax | Abstand |
| 7 | Polymer | Ay | Abstand |
| 8 | neutrale Faser | D1 | Durchmesser |
| 9 | Dehnungszone | D2 | Durchmesser |
| | Kompressionszone | D3 | Durchmesser |
| 11 | Faltungsrichtung | | |
| 12 | Mikrostruktur | | |
| 13 | Zwischenbereich | | |

## Patentansprüche

1. Ein faltbares Substrat (1) aus Glas, welches zumindest einen im Wesentlichen formstabilen Abschnitt (4) und zumindest einen flexiblen, insbesondere biegbaren, elastischen und/oder faltbaren Abschnitt (5) aufweist, wobei zumindest in dem flexiblen Abschnitt (5) einseitige bzw. das Substrat (1) nicht durchdringende Ausnehmungen (6) in eine Außenfläche des Substrats (1) eingebracht sind und dadurch die Materialstärke (D) des Substrats (1) in dem flexiblen Abschnitt (5) gegenüber dem angrenzenden Abschnitt (4) reduziert ist, wobei die zumindest eine Ausnehmung (6) durch mehrere insbesondere regelmäßig angeordnete, konkave Vertiefungen (3) gebildet ist, die von Mikrostrukturen (12) begrenzt sind, durch deren Verlauf eine verbleibende Materialstärke (Restdicke d) des Substrats (1) in dem flexiblen Abschnitt (5) bestimmt ist, wobei sich die Vertiefungen (3) zumindest abschnittsweise bis in einen Bereich mit einer Stärke (S) parallel zu der Außenfläche erstrecken, welcher bei einer Biegung des Substrats (1) eine Ebene einer neutralen Faser (8) zwischen einer Dehnungszone (9) und einer Kompressionszone (10) des Substrats (1) einschließt.

2. Substrat (1) nach Anspruch 1, **dadurch gekennzeichnet, dass** die Ebene der neutralen Faser (8) den Bereich in einen der Außenfläche abgewandten ersten Teilbereich, in dem die Vertiefungen (3) frei von Unstetigkeitsstellen sind, und in einen zweiten Teilbereich, in dem die Vertiefungen (3) einen stetigen und/oder nicht stetigen Verlauf aufweisen, unterteilt.

3. Substrat (1) nach Anspruch 1 oder 2, **dadurch gekennzeichnet, dass** die Ebene der neutralen Faser (8) zwischen einem Grund der konkaven Vertiefungen (3) und einem Randbereich zwischen benachbarten Vertiefungen (3) verläuft.

4. Substrat (1) nach zumindest einem der vorhergehenden Ansprüche, **dadurch gekennzeichnet, dass** zumindest einzelne Ausnehmungen (6) ein polymeres Füllmaterial, insbesondere mit einer Füllhöhe entsprechend der angrenzenden Abschnitte (4), aufweisen.

5. Substrat (1) nach zumindest einem der vorhergehenden Ansprüche, **dadurch gekennzeichnet, dass** das polymere Füllmaterial zumindest im Wesentlichen einem mit dem Brechungsindex im sichtbaren Spektrum des Glases überstimmenden Brechungsindex aufweist.

6. Substrat (1) nach zumindest einem der vorhergehenden Ansprüche, **dadurch gekennzeichnet, dass** die Vertiefungen (3) durch zumindest abschnittsweise periodisch bzw. in einem regelmäßigen Muster angeordnete Mikrostrukturen (12) gebildet sind.

7. Substrat (1) nach zumindest einem der vorhergehenden Ansprüche, **dadurch gekennzeichnet, dass** benachbarte Vertiefungen (3) in Richtung einer Biegung oder Faltung einen insbesondere zumindest 20 % größeren Abstand als in einer Querrichtung zu der Biegung oder Faltung aufweisen.

8. Substrat (1) nach zumindest einem der vorhergehenden Ansprüche, **dadurch gekennzeichnet, dass** die Vertiefungen (3) jeweils ein Zentrum aufweisen, in dem die verbleibende Materialstärke (Restdicke d) des Substrats (1) in dem flexiblen Abschnitt (5) am Geringsten ist.

9. Substrat (1) nach zumindest einem der vorhergehenden Ansprüche, **dadurch gekennzeichnet, dass** die Vertiefungen (3) rotationssymmetrisch, insbesondere sphärisch ausgeführt sind.

10. Substrat (1) nach zumindest einem der vorhergehenden Ansprüche, **dadurch gekennzeichnet, dass** der Bereich, in den sich die Vertiefungen (3) erstrecken, in verschiedenen flexiblen Abschnitten (5) mit unterschiedlichem Abstand zu der Oberfläche angeordnet sind und/oder eine unterschiedliche Stärke (S) aufweist.

11. Substrat (1) nach zumindest einem der vorhergehenden Ansprüche, **dadurch gekennzeichnet, dass** in zumindest einem, insbesondere in mehreren benachbarten flexiblen Abschnitten (5) die verbleibende Materialstärke (Restdicke d) des Substrats (1) durch unterschiedliche Vertiefungen (3), insbesondere kontinuierlich abnehmend oder zunehmend ausgeführt ist.

12. Substrat (1) nach zumindest einem der vorhergehenden Ansprüche, **dadurch gekennzeichnet, dass** die Vertiefungen (3) nach dem Prinzip einer dichten Kugelpackung, einer hexagonalen oder quadratischen Anordnung in dem flexiblen Abschnitt (5) angeordnet sind.

13. Verfahren zur Herstellung eines faltbaren Substrats (1) aus Glas nach zumindest einem der vorhergehenden Ansprüche, welches zumindest einen im Wesentlichen formstabilen Abschnitt (4) und zumindest einen flexiblen Abschnitt (5) aufweist, wobei zumindest in dem flexiblen Abschnitt (5) einseitige bzw. das Substrat (1) nicht durchdringende Ausnehmungen (6) als Mikrostrukturen (12) in eine Außenfläche des Substrats (1) eingebracht werden und dadurch die Materialstärke (D) des Substrats (1) in dem flexiblen Abschnitt durch einen Materialabtrag mittels eines Ätzverfahrens gegenüber dem angrenzenden Abschnitt reduziert wird, indem innerhalb des flexiblen Abschnitts (5) mittels Laserstrahlung Modifikationen (2) mit einer definierten Modifikationstiefe (t) bis in einen Bereich parallel zu der Außenfläche eingebracht werden und die Modifikationen (2) nachfolgend einem Ätzangriff ausgesetzt werden, durch den der Materialabtrag erfolgt, bis sich die so erzeugten Vertiefungen (3) zumindest über einen wesentlichen Teil der Materialstärke des Substrats (1) bis in den Bereich erstrecken, wobei die Vertiefungen (3) als konkave Vertiefungen (3) erzeugt werden, indem im Bereich der Modifikationen (2) zunächst ein anisotroper Materialabtrag erzeugt und anschließend der Ätzvorgang fortgesetzt wird, bis es zu einem isotropen Materialabtrag kommt und dadurch ein zumindest weitgehend stetiger Verlauf der Vertiefungen (3) erzeugt wird.

14. Verfahren nach Anspruch 13, **dadurch gekennzeichnet, dass** der isotrope Materialabtrag fortgesetzt wird, bis eine insbesondere sphärische Verrundung der Vertiefungen (3) in dem Bereich eintritt.

15. Verfahren nach Anspruch 13 oder 14, **dadurch gekennzeichnet, dass** die bei dem Ätzverfahren eingesetzte Ätzlösung in Abhängigkeit bestimmter Parameter des Substratmaterials derart eingestellt wird, dass ein möglichst selektiver Ätzfortschritt des Ätzverfahrens und/oder eine möglichst hohe Ätzrate erreicht werden.

## Claims

1. Foldable glass substrate (1) which has at least one substantially dimensionally stable portion (4) and at least one flexible, in particular bendable, elastic and/or foldable portion (5), wherein, at least in the flexible portion (5), recesses (6) which are one-sided, i.e. do not go all the way through the substrate (1), are made in an outer surface of the substrate (1) and as a result the material thickness (D) of the substrate (1) is reduced in the flexible portion (5) in relation to the adjoining portion (4), wherein the at least one recess (6) is formed by multiple, in particular regularly arranged, concave depressions (3) which are delimited by microstructures (12), the profile of which determines a remaining material thickness (residual thickness d) of the substrate (1) in the flexible portion (5), wherein the depressions (3) extend at least partly as far as a region which has a thickness (S) parallel to the outer surface and, when the substrate (1) is being bent, forms a neutral-axis plane (8) between a stretching zone (9) and a compression zone (10) of the substrate (1).

2. Substrate (1) according to Claim 1, **characterized in that** the neutral-axis plane (8) divides the region into a first sub-region, which faces away from the outer surface and in which the depressions (3) are free of points of discontinuity, and a second sub-region, in which the depressions (3) have a continuous and/or noncontinuous profile.

3. Substrate (1) according to Claim 1 or 2, **characterized in that** the neutral-axis plane (8) runs between a bottom of the concave depressions (3) and a peripheral region between adjacent depressions (3).

4. Substrate (1) according to at least one of the preceding claims, **characterized in that** at least individual recesses (6) comprise a polymer filler, in particular with a fill level corresponding to the adjoining portions (4).

5. Substrate (1) according to at least one of the preceding claims, **characterized in that** the polymer filler at least substantially has a refractive index that corresponds to the refractive index in the visible spectrum of the glass.

6. Substrate (1) according to at least one of the preceding claims, **characterized in that** the depressions (3) are formed by microstructures (12) which are arranged at least partly periodically, or in a regular pattern.

7. Substrate (1) according to at least one of the preceding claims, **characterized in that** adjacent depressions (3) have an in particular at least 20% greater spacing in the direction of a bend or fold than in a transverse direction to the bend or fold.

8. Substrate (1) according to at least one of the preceding claims, **characterized in that** the depressions (3) each have a centre in which the remaining material thickness (residual thickness d) of the substrate (1) in the flexible portion (5) is at its smallest.

9. Substrate (1) according to at least one of the preceding claims, **characterized in that** the depressions (3) are rotationally symmetrical, in particular spherical.

10. Substrate (1) according to at least one of the preceding claims, **characterized in that**, in different flexible portions (5), the region in which the depressions (3) extend is arranged with a different spacing from the surface and/or has a different thickness (S).

11. Substrate (1) according to at least one of the preceding claims, **characterized in that**, in at least one, in particular in multiple adjacent flexible portions (5), the remaining material thickness (residual thickness d) of the substrate (1) in particular continually increases or decreases owing to different depressions (3).

12. Substrate (1) according to at least one of the preceding claims, **characterized in that** the depressions (3) are arranged according to the principle of a close spherical packing, a hexagonal or a square arrangement in the flexible portion (5).

13. Method for producing a foldable glass substrate (1) according to at least one of the preceding claims, the substrate having at least one substantially dimensionally stable portion (4) and at least one flexible portion (5), wherein, at least in the flexible portion (5), recesses (6) which are one-sided, i.e. do not go all the way through the substrate (1), in the form of microstructures (12) are made in an outer surface of the substrate (1) and as a result the material thickness (D) of the substrate (1) is reduced in the flexible portion in relation to the adjoining portion by removing material by means of an etching method, by using laser radiation to make modifications (2), within the flexible portion (5), with a defined modification depth (t) as far as a region parallel to the outer surface and then subjecting the modifications (2) to an etching attack which effects the removal of material, until the depressions (3) thus created extend as far as the region at least over a substantial part of the material thickness of the substrate (1), wherein the depressions (3) are created in the form of concave depressions (3) by, in the region of the modifications (2), firstly inducing an anisotropic removal of material and then continuing the etching process until an isotropic removal of material occurs and as a result an at least largely continuous profile of the depressions (3) is created.

14. Method according to Claim 13, **characterized in that** the isotropic removal of material is continued until an in particular spherical rounding of the depressions (3) in the region occurs.

15. Method according to Claim 13 or 14, **characterized in that** the etching solution used in the etching method is adjusted on the basis of certain parameters of the substrate material in such a way that as selective as possible an etching progress of the etching method and/or a maximum etching rate are achieved.

## Revendications

1. Substrat pliable (1) en verre, qui présente au moins une section (4) essentiellement indéformable et au moins une section (5) flexible, notamment fléchissable, élastique et/ou pliable, où, au moins dans la section flexible (5), des évidements (6) unilatéraux ou ne traversant pas le substrat (1) sont pratiqués dans une surface extérieure du substrat (1), et l'épaisseur de matériau (D) du substrat (1) est ainsi réduite dans la section flexible (5) par rapport à la section adjacente (4), l'au moins un évidement (6) étant formé par plusieurs renfoncements concaves (3) notamment agencés de manière régulière, qui sont délimités par des microstructures (12) dont le tracé détermine une épaisseur de matériau restante (épaisseur résiduelle d) du substrat (1) dans la section flexible (5), où les renfoncements (3) s'étendent au moins par sections jusque dans une zone d'une épaisseur (S) parallèle à la surface extérieure, laquelle zone, lors d'une flexion du substrat (1), comprend un plan d'une fibre neutre (8) entre une zone d'étirement (9) et une zone de compression (10) du substrat (1).

2. Substrat (1) selon la revendication 1, **caractérisé en ce que** le plan de la fibre neutre (8) divise la zone en une première zone partielle détournée de la surface extérieure, dans laquelle les renfoncements (3) sont exempts de points de discontinuité, et en une deuxième zone partielle dans laquelle les renfoncements (3) présentent un tracé continu et/ou discontinu.

3. Substrat (1) selon la revendication 1 ou 2, **caractérisé en ce que** le plan de la fibre neutre (8) s'étend entre un fond des renfoncements concaves (3) et une zone de bordure entre des renfoncements voisins (3).

4. Substrat (1) selon au moins l'une des revendications précédentes, **caractérisé en ce qu'**au moins certains évidements (6) présentent un matériau de remplissage polymère, notamment avec une hauteur de remplissage correspondant aux sections adjacentes (4).

5. Substrat (1) selon au moins l'une des revendications précédentes, **caractérisé en ce que** le matériau de remplissage polymère présente au moins essentiellement un indice de réfraction coïncidant avec l'indice de réfraction du verre dans le spectre visible.

6. Substrat (1) selon au moins l'une des revendications précédentes, **caractérisé en ce que** les renfoncements (3) sont formés par des microstructures (12) agencées au moins par sections de manière périodique ou selon un motif régulier.

7. Substrat (1) selon au moins l'une des revendications précédentes, **caractérisé en ce que** des renfoncements voisins (3) présentent, dans la direction d'une flexion ou d'un pli, un écartement supérieur notamment d'au moins 20 % à celui dans une direction transversale par rapport à la flexion ou au pli.

8. Substrat (1) selon au moins l'une des revendications précédentes, **caractérisé en ce que** les renfoncements (3) présentent chacun un centre dans lequel l'épaisseur de matériau restante (épaisseur résiduelle d) du substrat (1) dans la section flexible (5) est la plus faible.

9. Substrat (1) selon au moins l'une des revendications précédentes, **caractérisé en ce que** les renfoncements (3) sont réalisés sous forme symétrique en rotation, notamment sphérique.

10. Substrat (1) selon au moins l'une des revendications précédentes, **caractérisé en ce que** la zone dans laquelle s'étendent les renfoncements (3) est agencée dans différentes sections flexibles (5) à différentes distances de la surface et/ou présente une épaisseur (S) différente.

11. Substrat (1) selon au moins l'une des revendications précédentes, **caractérisé en ce que**, dans au moins une, notamment dans plusieurs sections flexibles voisines (5), l'épaisseur de matériau restante (épaisseur résiduelle d) du substrat (1) est réalisée par différents renfoncements (3), notamment de manière continuellement décroissante ou croissante.

12. Substrat (1) selon au moins l'une des revendications précédentes, **caractérisé en ce que** les renfoncements (3) sont agencés dans la section flexible (5) selon le principe d'un empilement dense de billes, d'un agencement hexagonal ou carré.

13. Procédé de fabrication d'un substrat pliable (1) en verre selon au moins l'une des revendications précédentes, qui présente au moins une section (4) essentiellement indéformable et au moins une section flexible (5), où, au moins dans la section flexible (5), des évidements (6) unilatéraux ou ne traversant pas le substrat (1) sont pratiqués en tant que microstructure (12) dans une surface extérieure du substrat (1) et l'épaisseur de matériau (D) du substrat (1) est ainsi réduite dans la section flexible par rapport à la section adjacente par un enlèvement de matériau au moyen d'un procédé de gravure, en pratiquant à l'intérieur de la section flexible (5), au moyen d'un rayonnement laser, des modifications (2) d'une profondeur de modification définie (t) jusque dans une zone parallèle à la surface extérieure, et les modifications (2) sont ensuite soumises à une attaque chimique par laquelle l'enlèvement de matériau est effectué, jusqu'à ce que les renfoncements (3) ainsi créés s'étendent au moins sur une partie importante de l'épaisseur de matériau du substrat (1) jusque dans la zone, où les renfoncements (3) sont créés sous forme de renfoncements concaves (3), en créant d'abord un enlèvement de matériau anisotrope dans la zone des modifications (2), puis en poursuivant le processus de gravure jusqu'à obtenir un enlèvement de matériau isotrope, et un tracé au moins largement continu des renfoncements (3) est ainsi créé.

14. Procédé selon la revendication 13, **caractérisé en ce que** l'enlèvement de matériau isotrope est poursuivi jusqu'à ce qu'un arrondi notamment sphérique des renfoncements (3) apparaisse dans la zone.

15. Procédé selon la revendication 13 ou 14, **caractérisé en ce que** la solution de gravure utilisée dans le procédé de gravure est ajustée en fonction de paramètres déterminés du matériau de substrat de manière à obtenir une progression de gravure aussi sélective que possible du procédé de gravure et/ou un taux de gravure aussi élevé que possible.
